# EUROPÄISCHE PATENTSCHRIFT

(11) **EP 0 985 273 B1**
(45) Veröffentlichungstag und Bekanntmachung des Hinweises auf die Patenterteilung: **17.07.2002**
(21) Anmeldenummer: 98931977.7
(22) Anmeldetag: 22.04.1998
(51) Int. Cl.: H04B 1/38, B60R 11/02, H04Q 7/32

(54) **KRAFTFAHRZEUG-EINBAUVORRICHTUNG FÜR EIN MOBILTELEFON**
MOUNTING DEVICE FOR A MOBILE CAR TELEPHONE
INSTALLATION POUR LE MONTAGE D'UN TELEPHONE MOBILE A BORD D'UN VEHICULE

(30) Priorität: 27.05.1997 DE 19722181
(43) Veröffentlichungstag der Anmeldung: 15.03.2000
(73) Patentinhaber: SIEMENS AKTIENGESELLSCHAFT, 80333 München (DE)
(72) Erfinder: GÜNTZER, Peter, D-82194 Gröbenzell (DE)
(86) Internationale Anmeldenummer: DE9801127
(87) Internationale Veröffentlichungsnummer: WO9854845

(56) Entgegenhaltungen:
- WO-A-96/21327
- US-A- 5 212 810

## Beschreibung

Die Erfindung betrifft eine Kraftfahrzeug-Einbauvorrichtung für ein Mobiltelefon gemäß dem Oberbegriff des Anspruchs 1 sowie ein Mobiltelefon zur Verwendung mit der Kraftfahrzeug-Einbauvorrichtung.

Die Verwendung von Telefonen in Kraftfahrzeugen ist seit längerem bekannt. Die hierfür früher zumeist verwendeten analogen Autotelefone waren fest im Kraftfahrzeug installiert und ihre Verwendung somit auf das Kraftfahrzeug selbst beschränkt. Seit Einführung digitaler Netzstandards für die Mobilkommunikation (D- und E-Netze) sind Mobiltelefone (auch als Handys bezeichnet) von kleineren Ausmaßen und geringerem Gewicht möglich geworden, die leicht transportabel sind und sich zunehmender Beliebtheit erfreuen.

Um solche Mobiltelefone mit guter Sprachqualität in einem Kraftfahrzeug zu verwenden, sind Kraftfahrzeug-Einbauvorrichtungen bekannt, in denen das Mobiltelefon aufgenommen und mechanisch fixiert werden kann. Eine solche Kraftfahrzeug-Einbauvorrichtung weist außerdem Kontakte zur Verbindung mit dem Mobiltelefon, z. B. zur Aufladung der Batterie des Mobiltelefons, auf. Des weiteren sind Kontakte vorgesehen, die eine Verbindung zur Kraftfahrzeugantenne herstellen, um einen zufriedenstellenden Empfang zu ermöglichen.

Bevor nach dem Einschalten das Mobiltelefon zur Benutzung freigegeben wird, muß der Benutzer üblicherweise eine persönliche Identifikationsnummer (PIN) eingeben, die auf einer persönlichen Benutzerkarte (SIM) gespeichert ist. Das Mobiltelefon überprüft die Eingabe der korrekten PIN-Nummer und gibt dann die Benutzung des Gerätes frei. In Abhängigkeit vom Netzbetreiber ist es bei manchen Mobiltelefonen auch möglich, die Funktion der PIN-Abfrage auszuschalten.

Verwendet man nun ein Mobiltelefon mit zugehöriger Kraftfahrzeug-Einbauvorrichtung in dem Kraftfahrzeug, so ergeben sich für die Inbetriebnahme des Mobiltelefons im Kraftfahrzeug zwei Möglichkeiten:
1. Bei (falls möglich) abgeschalteter PIN-Abfrage kann derjenige, der unbefugt in den Besitz des im Kraftfahrzeug zurückgelassenen Mobiltelefons kommt, solange telefonieren, bis die SIM-Karte durch den Netzbetreiber gesperrt wird. Die dabei anfallenden möglicherweise erheblichen Telefongebühren gehen zu Lasten des rechtmäßigen Eigentümers des Mobiltelefons und der SIM-Karte.
2. Bei aktivierter PIN-Abfrage muß die PIN-Nummer bei jedem Einschalten des Telefons erneut eingegeben werden. Das heißt, der Fahrer des Kraftfahrzeuges muß, wenn er sein Mobiltelefon im Auto benutzen will, bei Fahrtantritt jedes Mal die PIN-Nummer eingeben, was umständlich und zeitraubend ist.

Es ist daher Aufgabe der vorliegenden Erfindung, eine Kraftfahrzeug-Einbauvorrichtung für ein Mobiltelefon zu schaffen, dessen Bedienung vereinfacht ist und die trotzdem einen Schutz vor unbefugtem Telefonieren bei Diebstahl des Mobiltelefons sicherstellt.

Die Aufgabe wird gelöst durch eine Kraftfahrzeug-Einbauvorrichtung für ein Mobiltelefon, wie sie in Anspruch 1 definiert ist. Die Einbauvorrichtung speichert einen Identifizierungscode, der bei Einschalten des Mobiltelefons von diesem angefordert wird. In Abhängigkeit von einem Freigabesignal von dem Kraftfahrzeug wird der Identifikationscode an das Mobiltelefon übertragen, so daß dieses wie bei der Eingabe der PIN-Nummer den Betrieb freigibt. Das Freigabesignal des Kraftfahrzeuges kann beispielsweise das Zündsignal sein. Der Benutzer identifiziert sich gegenüber dem Mobiltelefon somit nicht durch Eingabe der persönlichen PIN-Nummer, sondern durch Benutzung seines Autoschlüssels als der berechtigte Benutzer des Mobiltelefons. Dies erhöht den Bedienungskomfort des im Kraftfahrzeug verwendeten Mobiltelefons erheblich.

Der in der Kraftfahrzeug-Einbauvorrichtung gespeicherte Identifizierungscode kann die PIN-Nummer selbst oder eine verschlüsselte PIN-Nummer sein, wobei prinzipiell jedes Verschlüsselungsverfahren eingesetzt werden kann.

Bei einer Weiterbildung der erfindungsgemäßen Kraftfahrzeug-Einbauvorrichtung kann der Identifizierungscode eine codierte PIN-Nummer sein, die auf einem von dem Mobiltelefon zufällig erzeugten Signal oder Basiscodewort basiert. Empfängt das Mobiltelefon den aufgrund der gespeicherten PIN-Nummer und dem zufälligen Basiscodewort korrekt verschlüsselten Identifikationscode, wird der Betrieb des Mobiltelefons freigegeben. Empfängt und erkennt das Mobiltelefon ein Signal, das mittels des Basiscodeworts korrekt verschlüsselt wurde, jedoch nicht den korrekten Identifizierungscode enthält, wird der Benutzer von dem Mobiltelefon zur Eingabe der PIN aufgefordert. Empfängt das Mobiltelefon ein nicht korrekt verschlüsseltes Signal, so wird der Mobiltelefonbetrieb blockiert.

Zur Verbesserung der Diebstahlsicherheit kann der gespeicherte Identifizierungscode bei Unterbrechung der Stromversorgung der Kraftfahrzeug-Einbauvorrichtung beispielsweise durch die Autobatterie nach einer festgelegten Zeit gelöscht werden.

Die Kraftfahrzeug-Einbauvorrichtung kann so ausgebildet sein, daß beim Einschalten der Zündung ein Signal zum Anschalten des Mobiltelefons an dieses und beim Ausschalten der Zündung zum Ausschalten desselben übermittelt wird.

Ein Mobiltelefon zur Verwendung mit der erfindungsgemäßen Kraftfahrzeug-Einbauvorrichtung ist in den Ansprüchen 14 bis 18 beschrieben.

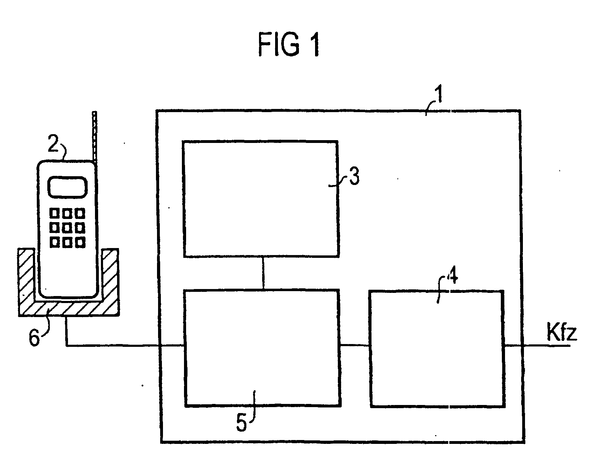

Im folgenden wird die Erfindung im Detail anhand von Ausführungsbeispielen unter Bezugnahme auf die Zeichnungen erläutert, in denen
- Fig. 1: eine schematische Darstellung einer erfindungsgemäßen Kraftfahrzeug-Einbauvorrichtung für ein Mobiltelefon ist;
- Fig. 2: ein Flußdiagramm zur Erläuterung der Funktionsweise eines ersten Ausführungsbeispiels der erfindungsgemäßen Kraftfahrzeug-Einbauvorrichtung; und
- Fig. 3: ein Flußdiagramm zur Erläuterung der Funktionsweise eines zweiten Ausführungsbeispiels der erfindungsgemäßen Kraftfahrzeug-Einbauvorrichtung ist.

Die an geeigneter Stelle innerhalb des Kraftfahrzeuges zu installierende Kraftfahrzeug-Einbauvorrichtung weist eine an sich bekannte Halterung 6 zur Aufnahme eines Mobiltelefons 2 sowie nicht dargestellte Kontakte zum Austausch von Signalen zwischen Mobiltelefon 2 und Kraftfahrzeug-Einbauvorrichtung 1 auf. Dabei können insbesondere Kontakte vorgesehen sein, die das Mobiltelefon 2 mit der Kraftfahrzeugantenne verbinden, um einen guten Empfang sicherzustellen. Weiterhin können eine Freisprecheinrichtung und eine Möglichkeit zur Aufladung der Mobiltelefon-Batterien durch die Kraftfahrzeugstromversorgung vorgesehen sein.

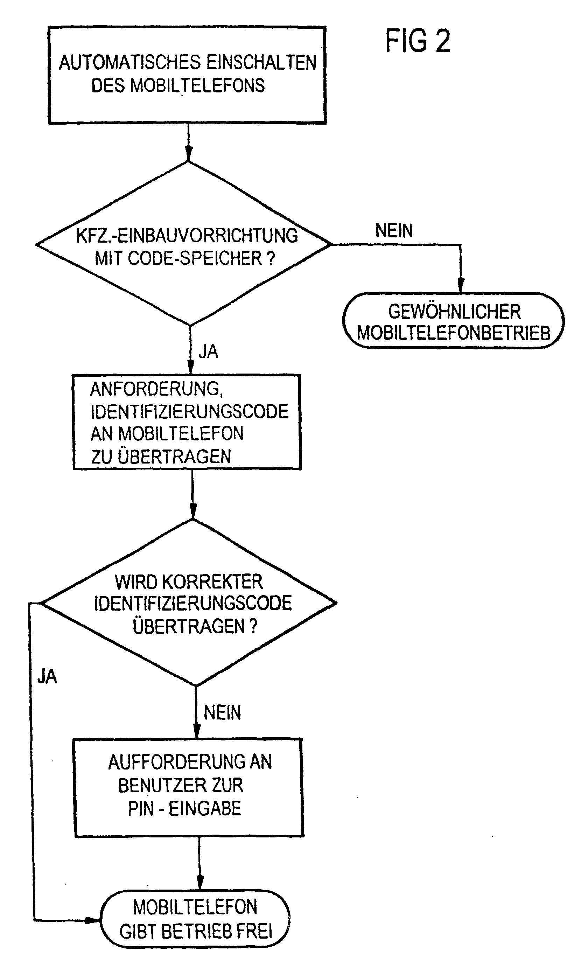

Die Kraftfahrzeug-Einbauvorrichtung weist eine Speichereinrichtung 3 zur Speicherung eines dem Mobiltelefon oder der Benutzer-SIM-Karte zugeordneten Identifizierungscodes, eine Codesignal-Übermittlungs-/Empfangseinrichtung 5 zum Senden und Empfangen von Signalen an/von dem Mobiltelefon 2 und eine Erfassungseinrichtung 4 zur Erfassung eines Freigabesignals von dem Kraftfahrzeug, wie etwa des Zündsignals auf. Die Funktionsweise der erfindungsgemäßen Kraftfahrzeug-Einbauvorrichtung und des zugehörigen erfindungsgemäßen Mobiltelefons wird im folgenden anhand des Flußdiagramms von Figur 2 erläutert.

Startet der Fahrer sein Kraftfahrzeug mittels des Zündschlüssels oder einem anderen geeigneten Mittel zum Nachweis seiner Berechtigung, so empfängt die Kraftfahrzeug-Einbauvorrichtung 1 vom Kraftfahrzeug ein Zündsignal und übermittelt an das Mobiltelefon ein Einschaltesignal. Daraufhin sendet das Mobiltelefon ein Signal an die Kraftfahrzeug-Einbauvorrichtung, um zu prüfen, ob es sich um eine Vorrichtung mit Code-Speicher für den Identifizierungscode handelt. Ist dies nicht der Fall, so geht das Mobiltelefon in einen gewöhnlichen Betriebszustand, wie bei Verwendung außerhalb des Kraftfahrzeugs, über und fragt vom Benutzer die Eingabe der PIN-Nummer an. Wird die Anfrage des Mobiltelefons positiv beantwortet, so fordert das Mobiltelefon die Einbauvorrichtung auf, den Identifizierungscode zu übertragen. Dieser kann die PIN-Nummer selbst oder eine codierte PIN-Nummer sein. Überträgt die Codesignal-Übertragungs-/Empfangseinrichtung 5 der Kraftfahrzeug-Einbauvorrichtung daraufhin den korrekten Identifizierungscode an das Mobiltelefon, so gibt eine im Mobiltelefon vorhandene Freigabe-/Blockiereinrichtung den Betrieb frei. Überträgt die Codesignal-Übertragungs-/Empfangseinrichtung 5 nicht den korrekten Identifizierungscode, beispielsweise weil dieser gar nicht abgespeichert ist, so fordert das Mobiltelefon den Benutzer auf, die PIN-Nummer einzugeben. Vorzugsweise erfolgt die Einspeicherung des Identifizierungscodes in die Speichervorrichtung 3 und damit die Initialisierung der Kraftfahrzeug-Einbauvorrichtung durch eine derartige manuelle Eingabe der PIN-Nummer.

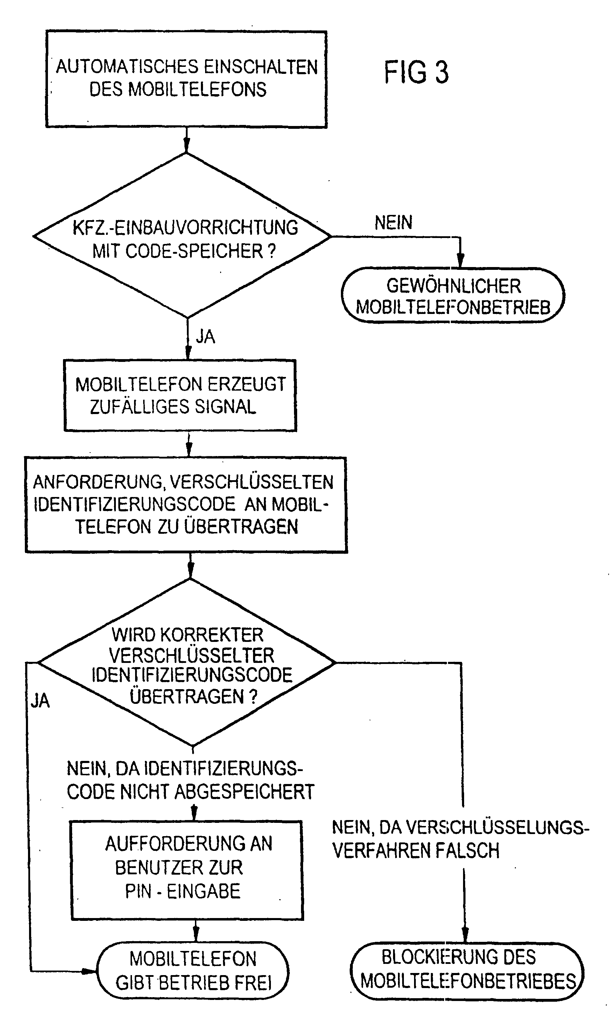

Die Funktionsweise eines zweiten Ausführungsbeispiels der erfindungsgemäßen Kraftfahrzeug-Einbauvorrichtung für ein Mobiltelefon wird nun anhand Fig. 3 erläutert.

Wie beim ersten Ausführungsbeispiel wird das in der Halterung 6 der Kraftfahrzeug-Einbauvorrichtung befindliche Mobiltelefon mit Betätigen der Zündung automatisch eingeschaltet. Das Mobiltelefon identifiziert daraufhin die "intelligente" Kraftfahrzeug-Einbauvorrichtung mit Code-Speicher und erzeugt mit der Anfrage des gespeicherten Identifizierungscodes ein zufällig erzeugtes Basiscodewort an die Kraftfahrzeug-Einbauvorrichtung. Aus dem zufällig erzeugten Basiscodewort und dem gespeicherten Identifizierungscode erzeugt die Einbauvorrichtung einen verschlüsselten Identifizierungscode und übermittelt diesen wiederum an das Mobiltelefon. Das Mobiltelefon prüft den Empfang des korrekten codierten Identifizierungscodes.

Erkennt die Freigabe-/Blockiereinrichtung, daß das Verschlüsselungsverfahren nicht korrekt ist, so identifiziert diese, daß die Kraftfahrzeug-Einbauvorrichtung nicht mit dem Mobiltelefon kompatibel ist (beispielsweise von einem anderen Hersteller stammt und das korrekte Verschlüsselungsverfahren daher nicht kennt) und blockiert den Mobilfunkbetrieb.

Erkennt die Freigabe-/Blockiereinrichtung, daß das korrekte Verschlüsselungsverfahren verwendet wurde, der Identifizierungscode jedoch (noch) nicht in der Einbauvorrichtung abgespeichert ist, so wird der Benutzer aufgefordert, die PIN-Nummer einzugeben. Daraufhin speichert die Einbauvorrichtung den Identifizierungscode, der wie beim ersten Ausführungsbeispiel die PIN-Nummer selbst sein kann, in der Speichervorrichtung 3 ab, so daß der Benutzer diese beim nächsten Starten des Fahrzeuges nicht erneut eingeben muß.

Erkennt die Freigabe-/Blockiervorrichtung den Empfang des korrekt verschlüsselten Identifizierungscodes, so wird der Mobiltelefonbetrieb freigegeben.

Die Kraftfahrzeug-Einbauvorrichtung für ein Mobiltelefon gemäß dem zweiten Ausführungsbeispiel hat den weiteren Vorteil, daß der Identifizierungscode mit dem zufällig vom Mobiltelefon erzeugten Basiscodewort verschlüsselt übermittelt wird. Dies bietet einen Schutz gegen ein unerwünschtes Herausfinden des Identifizierungscodes durch Unberechtigte.

Weiterhin ist es bei dem zweiten Ausführungsbeispiel der erfindungsgemäßen Kraftfahrzeug-Einbauvorrichtung für ein Mobiltelefon möglich, eine mit dem Mobiltelefon kompatible Einbauvorrichtung, die beispielsweise vom gleichen Hersteller oder Lizenznehmer stammt, zu erkennen und nur in diesem Falle den Betrieb des Mobiltelefons freizugeben.

## Patentansprüche

1. Kraftfahrzeug-Einbauvorrichtung (1) für ein Mobiltelefon (2), aufweisend:
eine Speichereinrichtung (3) zur Speicherung eines die Betriebsfreigabe des Mobiltelefons (2) bestimmenden Identifizierungscodes,
eine Einrichtung (4) zur Erfassung eines Freigabesignals von einem Kraftfahrzeug,
eine Codesignal-Übertragungs-Empfangseinrichtung (5), die dem Mobiltelefon (2) auf Anforderung den gespeicherten Identifizierungscode in Abhängigkeit von der Erfassung des Freigabesignals von dem Kraftfahrzeug übermittelt.

2. Kraftfahrzeug-Einbauvorrichtung für ein Mobiltelefon gemäß Anspruch 1,
**dadurch gekennzeichnet, daß**
das Freigabesignal von dem Kraftfahrzeug das Zündsignal ist.

3. Kraftfahrzeug-Einbauvorrichtung für ein Mobiltelefon nach Anspruch 1 oder 2,
**dadurch gekennzeichnet, daß**
der in der Kraftfahrzeug-Einbauvorrichtung (1) speicherbare Identifizierungscode die persönliche Identifikationsnummer (PIN) einer Mobiltelefon-Benutzerchipkarte ist.

4. Kraftfahrzeug-Einbauvorrichtung gemäß Anspruch 1 oder 2
**dadurch gekennzeichnet, daß**
der Identifizierungscode eine verschlüsselte persönliche Identifikationsnummer (PIN) einer Mobiltelefon-Benutzerchipkarte ist.

5. Kraftfahrzeug-Einbauvorrichtung für ein Mobiltelefon gemäß Anspruch 1 oder 2,
**dadurch gekennzeichnet, daß**
der Identifizierungscode ein gerätespezifischer Code des Mobiltelefons (1) ist.

6. Kraftfahrzeug-Einbauvorrichtung für ein Mobiltelefon gemäß einem der Ansprüche 1 bis 4,
**dadurch gekennzeichnet, daß**
der Identifizierungscode ein Codesignal ist, bei dessen Empfang das Mobiltelefon (2) die Aufforderung des Mobiltelefons an den Benutzer, die persönliche Identifikationsnummer (PIN) einzugeben, unterdrückt.

7. Kraftfahrzeug-Einbauvorrichtung für ein Mobiltelefon gemäß einem der vorangegangenen Ansprüche,
**dadurch gekennzeichnet, daß**
die Speichereinrichtung (3) den gespeicherten Identifizierungscode bei Unterbrechung der Stromversorgung der Kraftfahrzeug-Einbauvorrichtung (1) nach einer festgelegten Zeit löscht.

8. Kraftfahrzeug-Einbauvorrichtung für ein Mobiltelefon gemäß einem der vorangegangenen Ansprüche,
**dadurch gekennzeichnet, daß**
die Speichereinrichtung (3) den Identifizierungscode nach erfolgter Eingabe der persönlichen Identifikationsnummer (PIN) an das Mobiltelefon (2) durch den Benutzer abspeichert.

9. Kraftfahrzeug-Einbauvorrichtung für ein Mobiltelefon gemäß einem der vorangegangenen Ansprüche,
**dadurch gekennzeichnet, daß**
die Codesignal-Übertragungs-/Empfangseinrichtung (5) ausgebildet ist, ein zufälliges Signal vom Mobiltelefon (2) zu empfangen und mittels diesem den Identifizierungscode verschlüsselt an das Mobiltelefon (2) zu übermitteln.

10. Kraftfahrzeug-Einbauvorrichtung für ein Mobiltelefon gemäß Anspruch 9
**dadurch gekennzeichnet, daß**
das Verschlüsselungsverfahren für den Identifizierungscode den Hersteller und/oder Typ der Kraftfahrzeug-Einbauvorrichtung kennzeichnet.

11. Kraftfahrzeug-Einbauvorrichtung für ein Mobiltelefon gemäß Anspruch 9 oder 10,
**dadurch gekennzeichnet, daß**
die Codesignal-Übertragungs-/Empfangseinrichtung (5) nach Übermittlung des verschlüsselten Identifizierungscodes an das Mobiltelefon (2) eine unverschlüsselte Kommunikation zwischen Kraftfahrzeug-Einbauvorrichtung (1) und Mobiltelefon ermöglicht.

12. Kraftfahrzeug-Einbauvorrichtung für ein Mobiltelefon gemäß einem der Ansprüche 2 - 11,
**dadurch gekennzeichnet, daß**
die Codesignal-Übertragungs-/Empfangseinrichtung (5) nach Ausschalten der Zündung ein Signal zum Ausschalten des Mobiltelefons (2) an dieses übermittelt.

13. Kraftfahrzeug-Einbauvorrichtung gemäß einem der Ansprüche 2 bis 12,
**dadurch gekennzeichnet, daß**
die Codesignal-Übertragungs-/Empfangseinrichtung (5) nach Einschalten der Zündung des Kraftfahrzeugs ein Signal zum Einschalten des Mobiltelefons (2) an dieses übermittelt.

14. Mobiltelefon zur Verwendung mit einer Kraftfahrzeug-Einbauvorrichtung nach einem der Ansprüche 1 - 13,
**gekennzeichnet durch**
eine Einrichtung zur Erkennung einer mit dem Mobiltelefon verbundenen Kraftfahrzeug-Einbauvorrichtung,
eine Codesignal-Übertragungs-/Empfangseinrichtung zur Übertragung einer Anforderung an die Kraftfahrzeug-Einbauvorrichtung, den Identifizierungscode zu übermitteln,
eine Freigabe-/Blockiereinrichtung, die bei Empfang des korrekten Identifizierungscodes den Mobiltelefonbetrieb freigibt.

15. Mobiltelefon gemäß Anspruch 14,
**dadurch gekennzeichnet, daß**
die Freigabe-/Blockiereinrichtung bei Empfang des korrekten Identifizierungscodes von der Kraftfahrzeug-Einbauvorrichtung (1) die Aufforderung an den Benutzer, die persönliche Identifikationsnummer (PIN) einzugeben, unterdrückt.

16. Mobiltelefon gemäß Anspruch 14 oder 15 zur Verwendung mit einer Kraftfahrzeug-Einbauvorrichtung nach einen der Ansprüche 10 - 13,
**dadurch gekennzeichnet, daß**
die Codesignal-Übertragungs-/Empfangseinrichtung zusätzlich zu der Anforderung zur Übertragung des Identifizierungscodes ein zufällig erzeugtes Signal an die Kraftfahrzeug-Einbauvorrichtung (1) übermittelt, und daß die Codesignal-Übertragungs-/Empfangseinrichtung eine von der Kraftfahrzeug-Einbauvorrichtung (1) ausgesandten verschlüsselten Identifizierungscode empfängt, das Verschlüsselungsverfahren des empfangenen verschlüsselten Identifizierungscodes erkennt und Hersteller und/oder Typ der Kraftfahrzeug-Einbauvorrichtung (1) identifiziert.

17. Mobiltelefon gemäß Anspruch 16,
**dadurch gekennzeichnet, daß**
die Freigabe-/Blockiereinrichtung
- den Mobiltelefonbetrieb freigibt, wenn der korrekte Identifizierungscode empfangen wird,
- den Benutzer zur Eingabe der persönlichen Identifikationsnummer (PIN) auffordert, wenn nicht der korrekte Identifizierungscode empfangen wird, aber ein mit dem korrekten Verschlüsselungsverfahren verschlüsselter Identifizierungscode erfaßt wird, und
- den Mobiltelefonbetrieb blockiert, wenn der empfangene verschlüsselte Identifizierungscode nicht dem korrekten Verschlüsselungsverfahren entspricht.

18. Mobiltelefon zur Verwendung mit einer Kraftfahrzeug-Einbauvorrichtung nach einem der Ansprüche 1 - 13,
**dadurch gekennzeichnet, daß**
die Einrichtung zur Erkennung einer mit dem Mobiltelefon (2) verbundenen Kraftfahrzeug-Einbauvorrichtung (1) ein Anfragesignal an die Kraftfahrzeug-Einbauvorrichtung (1) sendet und aufgrund eines daraufhin von der Kraftfahrzeug-Einbauvorrichtung (1) empfangenen Antwortsignals dieses erkennt.

## Claims

1. Motor vehicle mounting device (1) for a mobile telephone (2), having:
a storage device (3) for storing an identification code which determines the operational release of the mobile telephone (2),
a device (4) for detecting a release signal from a motor vehicle,
a code signal transmission/reception device (5), which communicates to the mobile telephone (2) on request the stored identification code, in a manner dependent on the detection of the release signal from the motor vehicle.

2. Motor vehicle mounting device for a mobile telephone according to Claim 1,
**characterized in that**
the release signal from the motor vehicle is the ignition signal.

3. Motor vehicle mounting device for a mobile telephone according to Claim 1 or 2,
**characterized in that**
the identification code which can be stored in the motor vehicle mounting device (1) is the personal identification number (PIN) of a mobile telephone user smart card.

4. Motor vehicle mounting device according to Claim 1 or 2,
**characterized in that**
the identification code is an encrypted personal identification number (PIN) of a mobile telephone user smart card.

5. Motor vehicle mounting device for a mobile telephone according to Claim 1 or 2,
**characterized in that**
the identification code is an equipment-specific code of the mobile telephone (1).

6. Motor vehicle mounting device for a mobile telephone according to one of Claims 1 to 4,
**characterized in that**
the identification code is a code signal in the event of whose reception the mobile telephone (2) suppresses the request by the mobile telephone to the user to input the personal identification number (PIN).

7. Motor vehicle mounting device for a mobile telephone according to one of the preceding claims,
**characterized in that**
the storage device (3) erases the stored identification code in the event of interruption of the power supply of the motor vehicle mounting device (1), after a defined time.

8. Motor vehicle mounting device for a mobile telephone according to one of the preceding claims,
**characterized in that**
the storage device (3) stores the identification code after the personal identification number (PIN) has been input to the mobile telephone (2) by the user.

9. Motor vehicle mounting device for a mobile telephone according to one of the preceding claims,
**characterized in that**
the code signal transmission/reception device (5) is designed to receive a random signal from the mobile telephone (2) and, by means of the latter, to communicate the identification code in encrypted form to the mobile telephone (2).

10. Motor vehicle mounting device for a mobile telephone according to Claim 9,
**characterized in that**
the encryption method for the identification code identifies the manufacturer and/or type of the motor vehicle mounting device.

11. Motor vehicle mounting device for a mobile telephone according to Claim 9 or 10,
**characterized in that**
after the communication of the encrypted identification code to the mobile telephone (2), the code signal transmission/reception device (5) enables unencrypted communication between motor vehicle mounting device (1) and mobile telephone.

12. Motor vehicle mounting device for a mobile telephone according to one of Claims 2-11,
**characterized in that**
after the ignition has been switched off, the code signal transmission/reception device (5) communicates a signal to the mobile telephone (2) for switching the latter off.

13. Motor vehicle mounting device according to one of Claims 2 to 12,
**characterized in that**
after the ignition of the motor vehicle has been switched on, the code signal transmission/reception device (5) communicates a signal to the mobile telephone (2) for switching the latter on.

14. Mobile telephone for use with a motor vehicle mounting device according to one of Claims 1-13,
**characterized in that**
a device for recognizing a motor vehicle mounting device connected to the mobile telephone,
a code signal transmission/reception device for transmitting a request to the motor vehicle mounting device to communicate the identification code,
a release/blocking device, which releases the operation of the mobile telephone upon reception of the correct identification code.

15. Mobile telephone according to Claim 14,
**characterized in that**
upon reception of the correct identification code from the motor vehicle mounting device (1), the release/blocking device suppresses the request to the user to input the personal identification number (PIN).

16. Mobile telephone according to Claim 14 or 15 for use with a motor vehicle mounting device according to one of Claims 10-13,
**characterized in that**,
in addition to the request for transmission of the identification code, the code signal transmission/reception device communicates a randomly generated signal to the motor vehicle mounting device (1), and **in that** the code signal transmission/reception device receives an encrypted identification code sent by the motor vehicle mounting device (1), recognizes the encryption method of the received, encrypted identification code and identifies manufacturer and/or type of the motor vehicle mounting device (1).

17. Mobile telephone according to Claim 16,
**characterized in that**
the release/blocking device
- releases the operation of the mobile telephone if the correct identification code is received,
- requests the user to input the personal identification number (PIN) if the correct identification code is not received but an identification code encrypted by the correct encryption method is detected, and
- blocks the operation of the mobile telephone if the received, encrypted identification code does not correspond to the correct encryption method.

18. Mobile telephone for use with a motor vehicle mounting device according to one of Claims 1-13,
**characterized in that**
the device for recognizing a motor vehicle mounting device (1) connected to the mobile telephone (2) sends an enquiry signal to the motor vehicle mounting device (1) and, on the basis of a reply signal received in response from the motor vehicle mounting device (1), recognizes this.

## Revendications

1. Installation (1) pour le montage d'un téléphone mobile (2) à bord d'un véhicule, présentant :
un dispositif de mémorisation (3) pour la mémorisation d'un code d'identification déterminant la libération de fonctionnement du téléphone mobile (2),
un dispositif (4) pour l'enregistrement d'un signal de libération d'un véhicule,
un dispositif de transmission-réception de signal de code (5), qui, sur demande, transmet au téléphone mobile (2) le code d'identification mémorisé en fonction de l'enregistrement du signal de libération du véhicule.

2. Installation pour le montage d'un téléphone mobile à bord d'un véhicule selon la revendication 1,
**caractérisée en ce que**
le signal de libération du véhicule est le signal d'allumage.

3. Installation pour le montage d'un téléphone mobile à bord d'un véhicule selon la revendication 1 ou 2,
**caractérisée en ce que**
le code d'identification mémorisable dans l'installation pour le montage d'un téléphone mobile à bord d'un véhicule (1) est le code personnel (PIN) d'une carte à puce d'un utilisateur de téléphone mobile.

4. Installation pour le montage d'un téléphone mobile à bord d'un véhicule selon la revendication 1 ou 2,
**caractérisée en ce que**
le code d'identification est un code personnel (PIN) codé d'une carte à puce d'un utilisateur de téléphone mobile.

5. Installation pour le montage d'un téléphone mobile à bord d'un véhicule selon la revendication 1 ou 2,
**caractérisée en ce que**
le code d'identification est un code du téléphone mobile (1), spécifique à l'appareil.

6. Installation pour le montage d'un téléphone mobile à bord d'un véhicule selon l'une des revendications 1 à 4,
**caractérisée en ce que**
le code d'identification est un signal de code, à la réception duquel le téléphone mobile (2) supprime la demande du téléphone mobile à l'utilisateur d'entrer le code personnel (PIN).

7. Installation pour le montage d'un téléphone mobile à bord d'un véhicule selon l'une des revendications précédentes,
**caractérisée en ce que**
le dispositif de mémorisation (3) efface le code d'identification après un temps déterminé en cas d'interruption de l'alimentation en courant de l'installation (1) pour le montage d'un téléphone mobile à bord d'un véhicule.

8. Installation pour le montage d'un téléphone mobile à bord d'un véhicule selon l'une des revendications précédentes,
**caractérisée en ce que**
le dispositif de mémorisation (3) mémorise le code d'identification après l'entrée réussie par l'utilisateur du code personnel (PIN) sur le téléphone mobile (2).

9. Installation pour le montage d'un téléphone mobile à bord d'un véhicule selon l'une des revendications précédentes,
**caractérisée en ce que**
le dispositif de transmission-réception du signal de code (5) est exécuté pour recevoir un signal aléatoire du téléphone mobile (2) et pour transmettre le code d'identification au téléphone mobile (2) de manière codée au moyen de ce signal.

10. Installation pour le montage d'un téléphone mobile à bord d'un véhicule selon la revendication 9,
**caractérisée en ce que**
le procédé de codage du code d'identification caractérise le constructeur et/ou le type d'installation pour le montage d'un téléphone mobile à bord d'un véhicule.

11. Installation pour le montage d'un téléphone mobile à bord d'un véhicule selon la revendication 9 ou 10,
**caractérisée en ce que**
le dispositif de transmission-réception du signal de code (5), après la transmission du code d'identification codé au téléphone mobile (2), permet une communication non codée entre l'installation (1) pour le montage d'un téléphone mobile à bord d'un véhicule et le téléphone mobile.

12. Installation pour le montage d'un téléphone mobile à bord d'un véhicule selon l'une des revendications 2 à 11,
**caractérisée en ce que**
le dispositif de transmission-réception du signal de code (5), après la mise hors circuit de l'allumage, transmet un signal pour la mise hors fonction du téléphone mobile (2).

13. Installation pour le montage d'un téléphone mobile à bord d'un véhicule selon l'une des revendications 2 à 12,
**caractérisée en ce que**
le dispositif de transmission-réception du signal de code (5), après la mise en circuit de l'allumage du véhicule, transmet au téléphone mobile (2) un signal pour la mise en fonction de ce dernier.

14. Téléphone mobile pour utilisation avec une installation pour le montage à bord d'un véhicule selon l'une des revendications 1 - 13,
**caractérisé par**
un dispositif d'identification d'une installation pour le montage d'un téléphone mobile à bord d'un véhicule connectée au téléphone mobile,
un dispositif de transmission-réception de signal de code pour la transmission d'une demande à l'installation pour le montage d'un téléphone mobile à bord d'un véhicule de transmettre le code d'identification,
un dispositif de libération/blocage qui libère le fonctionnement du téléphone mobile à la réception du code d'identification correct.

15. Téléphone mobile selon la revendication 14,
**caractérisé en ce que**
le dispositif de libération/blocage, à la réception du code d'identification correct de l'installation (1) pour le montage d'un téléphone mobile à bord d'un véhicule, supprime la demande à l'utilisateur d'entrer le code personnel (PIN).

16. Téléphone mobile selon la revendication 14 ou 15 pour utilisation avec une installation pour le montage d'un téléphone mobile à bord d'un véhicule selon l'une des revendications 10 - 13,
**caractérisé en ce que**
le dispositif de transmission-réception du signal de code, en plus de la demande de transmettre le code d'identification, transmet à l'installation (1) pour le montage d'un téléphone mobile à bord d'un véhicule un signal créé de manière aléatoire, et **en ce que** le dispositif de transmission-réception du signal de code reçoit un code d'identification codé émis par l'installation (1) pour le montage d'un téléphone mobile à bord d'un véhicule, qu'il détecte le procédé de codage du code d'identification codé reçu et identifie le constructeur et/ou le type de l'installation (1) pour le montage d'un téléphone mobile à bord d'un véhicule.

17. Téléphone mobile selon la revendication 16,
**caractérisé en ce que**
le dispositif de libération/blocage
- libère le fonctionnement du téléphone mobile lorsque le code d'identification correct est reçu,
- demande à l'utilisateur d'entrer le code personnel (PIN) si le code d'identification reçu n'est pas correct mais qu'un code d'identification codé avec le procédé de codage correct est enregistré, et
- bloque le fonctionnement du téléphone mobile lorsque le code d'identification codé reçu ne correspond pas au procédé correct de codage.

18. Téléphone mobile pour utilisation dans une installation pour le montage d'un téléphone mobile à bord d'un véhicule, selon l'une des revendications 1 - 13,
**caractérisé en ce que**
le dispositif de détection d'une installation (1) pour le montage d'un téléphone mobile à bord d'un véhicule connectée au téléphone mobile (2) émet un signal de demande à l'installation (1) pour le montage d'un téléphone mobile à bord d'un véhicule et identifie ce signal en raison d'un signal de réponse reçu ensuite par l'installation (1) pour le montage d'un téléphone mobile à bord d'un véhicule.
